(19) Europäisches Patentamt
European Patent Office
Office européen des brevets

(11) EP 1 959 051 A1

(12) # EUROPEAN PATENT APPLICATION
published in accordance with Art. 158(3) EPC

(43) Date of publication:
**20.08.2008 Bulletin 2008/34**

(21) Application number: **06823126.5**

(22) Date of filing: **08.11.2006**

(51) Int Cl.:
***D06M 15/55*** *(2006.01)* ***C08J 5/24*** *(2006.01)*
***D06M 101/40*** *(2006.01)*

(86) International application number:
**PCT/JP2006/322222**

(87) International publication number:
**WO 2007/060833 (31.05.2007 Gazette 2007/22)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **25.11.2005 JP 2005340560**

(71) Applicant: **TORAY INDUSTRIES, INC.**
**Tokyo 103-8666 (JP)**

(72) Inventors:
- **SAKATA, Hiroaki c/o Ehime Plant,**
**Iyo-gun, Ehime 791-3193 (JP)**
- **KUROKI, Motohiro c/o Ehime Plant,**
**Iyo-gun, Ehime 791-3193 (JP)**
- **KOBAYASHI, Masanobu c/o Ehime Plant,**
**Iyo-gun, Ehime 791-3193 (JP)**

(74) Representative: **Weber, Joachim**
**Hoefer & Partner**
**Patentanwälte**
**Pilgersheimer Strasse 20**
**81545 München (DE)**

(54) **CARBON FIBER BUNDLE, PREPREG, AND CARBON FIBER REINFORCED COMPOSITE MATERIAL**

(57) This invention employs the following means for solving the aforesaid problems: A carbon fiber bundle that is coated with a sizing agent containing a flexible epoxy resin (A) and an epoxy resin (B) incompatible with the flexible epoxy resin (A) as essential components, wherein the epoxy resin (B) is an aliphatic polyglycidyl ether compound having three or more epoxy groups and an epoxy equivalent of 200 or less. The carbon fiber bundle of this invention provides a carbon fiber reinforced composite excellent in the tensile strength and the compressive strength in the fiber direction and excellent in the tensile strength in the perpendicular direction to the fiber direction and the interlaminar shear strength.

EP 1 959 051 A1

## Description

### TECHNICAL FIELD

The present invention relates to a carbon fiber bundle, which can be suitably applied as structural materials of aircraft, for sporting uses as golf shafts, fishing rods, etc, and for other general industrial uses, a prepreg using the carbon fiber bundle, and a carbon fiber reinforced composite.

### BACKGROUND ART

Carbon fiber reinforced composite are widely applied for sporting uses as golf shafts, fishing rods, etc., and also as structural materials of aircraft, etc., since they are light in weight and excellent in mechanical strength such as specific strength and specific modulus.

Such a carbon fiber reinforced composite is obtained from a carbon fiber bundle and a matrix resin. The carbon fiber bundle used here is coated with a sizing agent containing, for example, a thermosetting resin for bundling carbon fibers. The thermosetting resins suitably used in the sizing agent include phenol resins, melamine resins, bismaleimide resins, unsaturated polyester resins, epoxy resins, etc. Above all, epoxy resins are excellent in heat resistance, moldability and adhesion with carbon fibers and are suitable as sizing agents used for producing fiber reinforced composite with high mechanical strength.

In the case where such a carbon fiber reinforced composite is applied as a structural material of aircraft, vehicle or ship, etc., the carbon fiber reinforced composite is required to have a high compressive strength in the fiber direction, in addition to the tensile strength in the fiber direction and the tensile strength in the perpendicular direction to the fiber direction and the shear strength.

For improving the tensile strength of a carbon fiber reinforced composite, proposed is a method of using a dimer acid modified epoxy resin known as a flexibilizer, as a sizing agent (see patent document 1). However, this method has a problem that it is difficult to achieve desired values as the compressive strength in the fiber direction, the tensile strength in the perpendicular direction to the fiber direction and the interlaminar shear strength, etc., though the tensile strength of the carbon fiber reinforced composite in the fiber direction can be excellent.

Further, for improving the adhesion with the matrix resin constituting the carbon fiber reinforced composite, proposed is a method of using a polyfunctional epoxy resin known as a reactive diluent, as a sizing agent (see patent document 2). However, this method has a problem that it is difficult to achieve desired values as the tensile strength, the compressive strength, etc. in the fiber direction though the tensile strength in the perpendicular direction to the fiber direction and the interlaminar shear strength of the carbon fiber reinforced composite can be excellent.

Furthermore, for improving the compressive strength of a carbon fiber reinforced composite, proposed is a method of using an epoxy resin with three or more epoxy groups in the molecule, N,N-diglycidylaniline and an aromatic diamine compound as the matrix resin (see patent document 3). However, this problem is that the tensile strength of the carbon fiber bundle itself cannot be translated to composite material properties enough, though the compressive strength can be improved.

In addition, methods of using various epoxy resins as sizing agents are proposed (see patent documents 4 and 5), but no carbon fiber bundle that can be processed into a fiber reinforced composite with satisfactorily high properties is obtained.

Patent document 1: JP2004-149721A
Patent document 2: JP7-279040A
Patent document 3: JP2002-363253A
Patent document 4: JP2004-149980A
Patent document 5: JP2004-169260A

### DISCLOSURE OF THE INVENTION

### PROBLEMS TO BE SOLVED BY THE INVENTION

An object of this invention is to provide a carbon fiber bundle used for obtaining a carbon fiber reinforced composite excellent in the tensile strength and the compressive strength in the fiber direction and in the tensile strength in the perpendicular direction to the fiber direction and the interlaminar shear strength.

Another object of this invention is to provide a carbon fiber reinforced composite excellent in the tensile strength and the compressive strength in the fiber direction and in the tensile strength in the perpendicular direction to the fiber direction and the interlaminar shear strength.

## MEANS FOR SOLVING THE PROBLEMS

This invention employs the following means for solving the aforesaid problems: A carbon fiber bundle that is coated with a sizing agent containing a flexible epoxy resin (A) and an epoxy resin (B) incompatible with the flexible epoxy resin (A) as essential components, wherein the epoxy resin (B) is an aliphatic polyglycidyl ether compound having three or more epoxy groups and an epoxy equivalent of 200 or less.
Further, this invention provides a prepreg comprising said carbon fiber bundle and a matrix resin containing a polyfunctional glycidylamine epoxy resin and an aromatic diamine curing agent.
Furthermore, this invention provides a carbon fiber reinforced composite comprising said carbon fiber bundle and a cured product of a resin composition containing a polyfunctional glycidylamine epoxy resin and an aromatic diamine curing agent.
Moreover, this invention provides a prepreg containing a carbon fiber bundle and a matrix resin, wherein the carbon fiber bundle is coated with a sizing agent containing a flexible epoxy resin (A) and an epoxy resin (B) incompatible with the flexible epoxy resin (A) as essential components, and the matrix resin is incompatible with the flexible epoxy resin (A) and contains a polyfunctional glycidylamine epoxy resin and an aromatic diamine curing agent.
Still furthermore, this invention provides a carbon fiber reinforced composite obtained as a cured product of abovementioned prepreg.

## EFFECTS OF THE INVENTION

This invention can provide a carbon fiber bundle that allows the single fibers thereof to be easily loosened and can be well impregnated with a matrix resin. Further, the carbon fiber bundle of this invention can be used to provide a carbon fiber reinforced composite excellent in the tensile strength and the compressive strength in the fiber direction and in the tensile strength in the perpendicular direction to the fiber direction and the interlaminar shear strength.

## THE BEST MODES FOR CARRYING OUT THE INVENTION

The inventors found that a carbon fiber bundle coated with a sizing agent containing a flexible epoxy resin (A) and an epoxy resin (B) incompatible with the flexible epoxy resin (A) as essential components can solve the abovementioned problems all at once.
The flexible epoxy resin (A) used in this invention is a flexible epoxy resin containing an aliphatic hydrocarbon structure, a polyether structure, etc. in the skeleton thereof. As the flexible epoxy resin (A), an epoxy resin containing two or more epoxy groups and containing one or more of the groups (skeletons) represented by the following structural formulae (1) and (2)
[Chemical formula 1]

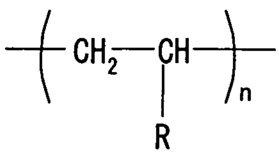

... Formula (1)

[Chemical formula 2]

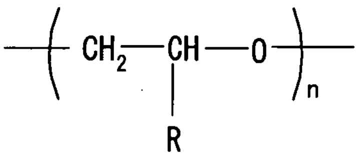

… Formula (2)

(in the above formulae (1) and (2), n denotes an integer of 2 or more, and R denotes a hydrogen atom or alkyl group with 1 to 4 carbon toms) between the epoxy group and the epoxy group, since these groups have a high effect of improving the tensile strength of the carbon fiber reinforced composite in the fiber direction. It is preferred that n denotes 20 or less.

Particular examples of the flexible epoxy resin (A) include a dimer acid modified epoxy resin, castor oil modified epoxy resin, soybean oil modified epoxy resin, linseed oil modified epoxy resin, aliphatic polyol modified epoxy resin, alicyclic epoxy resin, etc.

Further, particular examples commercially available as the flexible epoxy resin (A) include dimer acid modified epoxy resins {"jER" (registered trademark) 871, "jER" (registered trademark) 872} (respectively produced by Japan Epoxy Resins Co. , Ltd.), caster oil modified epoxy resin {"ERISYS" (registered trademark) GE-35} (produced by PTI Japan K.K.), aliphatic polyol polyglycidyl ether {"ERISYS" (registered trademark) GE-36} (produced by PTI Japan K.K.), linseed oil modified epoxy resin (L-500) (produced by Daicel Chemical Industries, Lid.), flexible alicyclic epoxy resins (GT-301 and GT-401) (produced by Daicel Chemical Industries, Ltd.), chain alicyclic epoxy resins (EP-4000 and EP-4005) (produced by Asahi Denka Kogyo K.K.), linear carboxylic acid diglycidyl ester (IPU-22G) (produced by Okamura Oil Mill, Ltd.), etc.

In general, if a flexible epoxy resin is added to a matrix resin consisting of an epoxy resin with a high crosslinking density provided, the crosslinking density of the matrix resin can be lowered and the elongation of the cured resin can be improved. Further, a flexible epoxy resin is useful as an additive for making a matrix resin flexible and tough. However, a flexible epoxy resin has a problem that if it is added to the matrix resin for a carbon fiber reinforced composite, the elastic modulus of the cured matrix resin decreases, and as a result, that the compressive strength of the carbon fiber reinforced composite decreases. However, in the case where a flexible epoxy resin is used as an component of the sizing agent of a carbon fiber bundle as in this invention, since the flexible epoxy resin exists on the surfaces of carbon fibers only, the whole elastic modulus of the cured matrix resin does not decrease. Further, since the flexible epoxy resin contributes to releasing the tension stress in the fiber direction on the surfaces of carbon fibers, the tensile strength of the carbon fiber reinforced composite in the fiber direction can be improved.

On the other hand, since a flexible epoxy resin has a skeleton for giving flexibility, it is characteristically generally low polarity. So, a flexible epoxy resin has a problem that if it is used alone as a sizing agent, the matrix resin such as an epoxy resin is difficult to be impregnated into the carbon fiber bundle, and that the obtained composite material tends to be easy to form voids, for lowering the tensile strength of the carbon fiber reinforced composite in the perpendicular direction to the fiber direction and the interlaminar shear strength.

Therefore, in this invention, an epoxy resin (B) incompatible with the flexible epoxy resin (A) is used together with the flexible epoxy resin (A).

As the epoxy resin (B) used in this invention, an aliphatic polyglycidyl ether compound having three or more epoxy groups and an epoxy equivalent of 200 or less is especially preferred.

If the epoxy resin (B) is used as an component of the sizing agent, the adhesion with the carbon fibers can be improved, and the tensile strength in the perpendicular direction to the fiber direction and the interlaminar shear strength can be improved. The epoxy resin (B) is preferred that it has many highly adhesive epoxy groups, because of importance for the adhesion with carbon fibers. However, six epoxy groups are usually sufficient in view of the effect. If the number of epoxy groups is too large, the carbon fiber bundle becomes too hard and decreases in spreadability, resulting in a tendency to lower the handling properties of the carbon fibers. It is preferred that the epoxy equivalent of the epoxy resin (B) is 120 to 200. A more preferred range is 120 to 190. If the epoxy equivalent is more than 200, the adhesion with carbon fibers tends to decrease.

On the other hand, in the case where the epoxy resin (B) is used alone as a sizing agent, when a carbon fiber is given a tension stress in the fiber direction, the stress concentration happens without a tension stress spreading through the whole carbon fiber. Because this stress concentration causes breakage of the carbon fibers and this breakage gradually spreads, problem arises that the tensile strength of the carbon fiber reinforced composite along fiber direction decrease.

As the aliphatic polyglycidyl ether compound having three or more epoxy groups and an epoxy equivalent of 200 or less, for example, diglycerol polyglycidyl ether {"Denacole" (registered trademark) EX-421 (produced by Nagase ChemteX Corporation), polyglycerol polyglycidyl ethers {"Denacole" (registered trademark) EX-512 and EX-521} (produced by Nagase ChemteX Corporation), and sorbitol polyglycidyl ether ("Denacole" (registered trademark) EX-614B) (produced by Nagase ChemteX Corporation) can be preferably used, though not limited to them. Other examples include trimethylolpropane triglycidyl ether {"ERISYS" (registered trademark) GE-30} (produced by PTI Japan K.K.), trimethylolethane triglycidyl ether {"ERISYS" (registered trademark) GE-31} (produced by PTI Japan K.K.), etc.

A feature of this invention is to use a flexible epoxy resin (A) and an epoxy resin (B) simultaneously as described above. Further, it is important that the flexible epoxy resin (A) and the epoxy resin (B) are not compatible with each other, that is, the flexible epoxy resin (A) and the epoxy resin (B) are incompatible with each other. If the flexible epoxy resin (A) and the epoxy resin (B) are compatible with each other, their effects are offset, and the intended well-balanced carbon fiber reinforced composite cannot be obtained. Only when the flexible epoxy resin (A) and the epoxy resin (B) are incompatible with each other, the intended carbon fiber reinforced composite can be obtained. The reason can be considered to be as described below. If the flexible epoxy resin (A) and the epoxy resin (B) are used simultaneously as a sizing agent, the epoxy resin (B) with relatively high polarity is expelled by the flexible epoxy resin (A) because of incompatibility, to selectively gather on the surfaces of carbon fibers, for being more adhesive to the carbon fibers. Thus, the flexible epoxy resin (A) gathers outside the epoxy resin (B), to form a flexible layer.

Another mode of this invention is a prepreg comprising a carbon fiber bundle and a matrix resin. In the prepreg, the carbon fiber bundle is coated with a sizing agent containing a flexible epoxy resin (A) and an epoxy resin (B) incompatible with the flexible epoxy resin (A) as essential components, and the matrix resin is composed of a specific epoxy resin composition incompatible with the flexible epoxy resin (A).

As the epoxy resin (B) used in this mode, an aliphatic polyglycidyl ether compound having three or more epoxy groups and an epoxy equivalent of 200 or less or a polyfunctional glycidylamine epoxy resin, etc. is preferred. An aliphatic polyglycidyl ether compound having three or more epoxy groups and an epoxy equivalent of 200 or less is especially preferred.

As the aliphatic polyglycidyl ether compound having three or more epoxy groups and an epoxy equivalent of 200 or less, those enumerated before can be preferably used.

As the polyfunctional glycidylamine epoxy resin, for example, tetraglycidyl diaminodiphenylmethane, triglycidyl aminophenol, triglycidyl aminocresol, etc. can be preferably used. As the tetraglycidyl diaminodiphenylmethane, for example, "Sumiepoxy" (registered trademark) ELM434 (produced by Sumitomo Chemical Co., Ltd.), YH434L (produced by Tohto Kasei Co., Ltd.), "Araldite" (registered trademark) MY720 (Huntsman Advanced Materials K.K.), "jER" 604 (registered trademark, produced by Japan Epoxy Resins Co., Ltd.), etc. can be used. As the triglycidyl aminophenol or triglycidyl aminocresol, for example, "Sumiepoxy" (registered trademark) ELM100 (produced by Sumitomo Chemical Co., Ltd.), "Araldite" (registered trademark) MY0510, "Araldite" (registered trademark) MY0500, "Araldite" (registered trademark) MYO600 (respectively produced by Huntsman Advanced Materials K.K.), "jER" 630 (registered trademark, produced by Japan Epoxy Resins Co., Ltd.), etc. can be used.

In this mode, it is a feature to use a flexible epoxy resin (A) and an epoxy resin (B) incompatible with each other as the components of a sizing agent and to use a specific epoxy resin matrix incompatible with the flexible epoxy resin (A) simultaneously. With this feature, even in the case where a compound other than the sizing agent consisting of a flexible epoxy resin (A) and an aliphatic polyglycidyl ether compound is used, a prepreg capable of exhibiting the effects of this invention can be obtained, and an intended carbon fiber reinforced composite can be obtained. The reason is considered to be as described below. Since the flexible epoxy resin (A) is not compatible with the epoxy resin (B) or the matrix resin, it is considered that the flexible epoxy resin (A) exists as lumps near the carbon fibers, to form a flexible layer. On the other hand, the epoxy resin (B) with relatively high polarity and the glycidylamine epoxy resin contained in the matrix resin are compatible with each other, and incompatible with the flexible epoxy resin (A). So, they gather on the surfaces of carbon fibers, to inhibit that the adhesiveness between the carbon fibers and the matrix resin decreases. On the other hand, the lumps formed of the flexible epoxy resin (A) contribute to releasing the tension stress in the fiber direction on the surfaces of carbon fibers.

In this invention, to be compatible with each other means that the mixture consisting of the flexible epoxy resin (A) and the epoxy resin (B) becomes homogeneous and transparent, when they are subjected to a heat history corresponding to the molding conditions to cure the matrix resin. Any other state than the above state such as a state of being perfectly separated in two phases or a state of being homogeneous but not transparent under the same condition means that both the resins are incompatible with each other.

In this invention, it is preferred that the ratio by weight of the flexible epoxy resin (A) to the epoxy resin (B), namely, (A) / (B) is 0.6 to 2.0. A more preferred range is (A) / (B) = 0.8 to 1.5. In the case where the ratio by weight of (A)/(B) is smaller than 0.6, when a carbon fiber bundle is processed into a prepreg or woven, the friction between the carbon fiber bundle and metallic guides, etc. is likely to generate fuzz, and as a result, the appearance quality such as the smoothness of the prepreg may decrease. Further, the tensile strength in the fiber direction tends to decrease. If

the ratio by weight of (A) / (B) is larger than 2.0, the matrix resin such as an epoxy resin is difficult to be impregnated into the carbon fiber bundle, and voids are easy to be formed in the obtained composite, resulting in a tendency to lower the tensile strength in the perpendicular direction to the fiber direction and the interlaminar shear strength.

Further, it is preferred that the size content is 0.3 to 3.0 wt% based on the total weight of carbon fibers. A more preferred range is 0.4 to 2.0 wt%. If the size content per unit weight of carbon fibers is too small, the effect of improving the ductility and the toughness of the cured resin layer near the surfaces of carbon fibers in the composite decreases. In this case, the tensile strength and the compressive strength of the carbon fiber reinforced composite tend to decrease. Further, when a carbon fiber bundle is processed into a prepreg or woven, the carbon fiber bundle cannot endure the friction with the metallic guides, etc. with which they run in contact, and are easy to generate fuzz, and as a result, the appearance quality such as the smoothness of the prepreg may decrease. On the other hand, if the size content is too large, the matrix resin such as an epoxy resin is not impregnated into the carbon fiber bundle, being inhibited by the sizing agent film formed around the carbon fiber bundle, resulting in a tendency to form voids in the obtained composite. In this case, the appearance quality and the mechanical properties of the carbon fiber reinforced composite tend to decrease.

Further, for improving the handling properties, abrasion resistance and fuzz resistance of the carbon fiber bundle and for improving the matrix resin impregnability, as required, a resin other than epoxy resins such as polyurethane, polyester or polyamide and auxiliary components such as a dispersing agent and a surfactant can also be added to the sizing agent used in this invention.

The carbon fiber bundle used in this invention is a bundle consisting of thousands to tens of thousands of carbon fiber filaments. As the carbon fiber filaments, publicly known carbon fibers such as polyacrylonitrile (hereinafter called PAN) based carbon fibers, rayon-based carbon fibers or pitch-based carbon fibers can be used. Especially for obtaining the reinforcement effect, it is preferred to use a PAN-based carbon fiber bundle likely to provide a carbon fiber bundle with high strength.

It is preferred that the total fineness of the carbon fiber bundle is 400 to 3000 tex. It is preferred that the number of filaments of a carbon fiber bundle is 1000 to 100000. A more preferred range is 3000 to 50000. It is preferred that the strength of the carbon fiber bundle is 1 to 10 GPa, and a more preferred range is 5 to 8 GPa. It is preferred that the modulus of the carbon fiber bundle is 100 to 1000 GPa, and a more preferred range is 200 to 600 GPa.

A method for producing a carbon fiber bundle of this invention is described below in detail considering a case where a PAN-based carbon fiber bundle is used.

The spinning method to be applied for obtaining the precursor fibers of a carbon fiber bundle is a wet spinning, a dry spinning or semi-wet spinning, etc. A wet spinning or a semi-wet spinning is preferred to obtain high strength fibers easily. Especially a semi-wet spinning is preferred. A solution or suspension containing a polyacrylonitrile homopolymer or copolymer can be used for the spinning solution.

The spinning solution is spun through a spinneret, coagulated, washed with water and stretched to obtain precursor fibers. The precursor fibers are stabilized, carbonized, and graphitized, as required, to obtain a carbon fiber bundle. The obtained carbon fiber bundle is, as required, surface oxidized such as electrolytic surface treatment, to improve an adhesion to the matrix resin.

The substantially twistless carbon fiber bundle obtained as described above is coated with a sizing agent. A simple method for depositing the sizing agent on the carbon fiber bundle is to apply a sizing agent solution obtained by dissolving or dispersing the sizing agent into a solvent to the carbon fiber bundle and to subsequently dry the carbon fiber bundle, to remove the solvent.

As a means for applying the sizing agent solution to the carbon fiber bundle, a roller sizing method, roller immersion method, spray method, etc. can be used. Above all, a roller immersion method can be preferably used, since a sizing agent can be uniformly applied to a carbon fiber bundle consisting of numerous single fibers.

As the solvent used for the sizing agent solution, an aqueous dispersion obtained by emulsifying the solvent with a surfactant is most suitable in view of handling properties and safety. The sizing agent concentration of the sizing agent solution must be adequately adjusted, considering the sizing agent solution application method, the adjustment of the amount of the extra sizing agent solution by squeezing, etc. It is preferred that the sizing agent concentration is usually in a range from 0.2 wt% to 20 wt%.

It is preferred that the temperature of the sizing agent solution is in a range from 10 to 50°C, for inhibiting the variation of the sizing agent concentration caused by evaporation of the solvent. Further, if the amount of the extra sizing agent solution is adjusted by squeezing after the sizing agent solution is applied, the size content can be adjusted, and the sizing agent can be uniformly applied into the carbon fiber bundle. The solvent can be suitably removed by drying at a temperature of 120 to 300°C for 10 seconds to 10 minutes. More suitably, it can be removed by drying at a temperature of 150 to 250°C for 30 seconds to 4 minutes.

Methods for depositing two or more epoxy resins as a sizing agent on the carbon fiber bundle include a method in which a sizing agent solution obtained by simultaneously dissolving or dispersing two or more epoxy resins into a solvent is applied to the carbon fiber bundle, and a method in which sizing agent solutions obtained by dissolving or

dispersing each of the epoxy resins into a different solvent are applied one by one to the carbon fiber bundle and dried.

As the matrix resin of the carbon fiber reinforced composite, a thermosetting resin or a thermoplastic resin can be used. In view of satisfying both moldability and mechanical properties, an epoxy resin can be preferably used. Above all, in view of heat resistance, an epoxy resin containing glycidyl ether groups obtained by letting epichlorohydrin react with hydroxyl groups or glycidylamino groups or by letting epichlorohydrin react with amino groups can be preferably used. For example, a glycidyl ether such as a bisphenol A epoxy resin, bisphenol F epoxy resin or bisphenol S epoxy resin or a glycidylamine such as tetraglycidyl diaminodiphenylmethane or triglycidyl aminophenol can be preferably used. Further, biphenyl epoxy resin, naphthalene epoxy resin, dicyclopentadiene epoxy resin, diphenylfluorene epoxy resin, phenol novolak epoxy resin, cresol novolak epoxy resin, phenol aralkyl epoxy resin, tetrakis(glycidyloxyphenyl) ethane, tris(glycidyloxy)methane, and their mixtures can also be used, since they are rigid resins with good water and heat resistance.

When any of these epoxy resins is used, a catalyst such as an acid or base and a curing agent can also be added as required. For example, for curing an epoxy resin, a Lewis acid such as a boron halide complex or p-toluenesulfonate or a polyamine curing agent such as diaminodiphenylsulfone, diaminodiphenylmethane or any of their derivatives or isomers can be preferably used.

As the matrix resin of the carbon fiber reinforced composite of this invention, it is preferred to use an epoxy resin composition incompatible with the flexible epoxy resin (A). A flexible epoxy resin (A) is used as a component of the sizing agent of the carbon fiber bundle in this invention. Even in this case, if it diffuses into the matrix resin at the time of molding, it cannot release the tension stress in the fiber direction on the surfaces of carbon fibers, and the effect of improving the tensile strength of the carbon fiber reinforced composite in the fiber direction becomes small. Further, if the flexible epoxy resin (A) diffuses into the matrix resin, the elastic modulus of the matrix resin decreases at the time of molding, and as a result, the compressive strength of the carbon fiber reinforced composite under hot-wet condition decreases. Meanwhile in this invention, to be compatible with each other means that the mixture consisting of the flexible epoxy resin (A) and the epoxy resin composition as the matrix resin becomes homogeneous and transparent, when they are subjected to a heat history corresponding to the molding conditions to cure the matrix resin. Any other state than the above state such as a state of being perfectly separated in two phases or a state of being homogeneous but not transparent under the same condition means that both the resins are incompatible with each other.

As the matrix resin, it is especially preferred to use an epoxy resin containing a polyfunctional glycidylamine epoxy resin and an aromatic diamine curing agent. In general, a matrix resin containing a polyfunctional glycidylamine epoxy resin and an aromatic diamine curing agent has a high crosslinking density and can improve the heat resistance and the compressive strength of the carbon fiber reinforced composite. However, there is a problem that since low resin ductility, the tensile strength in the fiber direction decreases. The reason is as described below. If carbon fibers are given a tension stress in the fiber direction, at first carbon fibers are broken, and the rupture of carbon fibers propagates to the resin in the case of a low resin ductility. Thus, the adjacent carbon fibers are broken. This phenomenon is repeated to result in the whole rupture.

However, in the case where a carbon fiber bundle containing a flexible epoxy resin (A) as an component of the sizing agent is used, the flexible epoxy resin (A) is unlikely to diffuse in the matrix resin but is likely to remain on the surfaces of carbon fibers at the time of molding, since the flexible epoxy resin (A) is low in the compatibility with the matrix resin containing a polyfunctional glycidylamine epoxy resin and an aromatic diamine curing agent. Therefore, when tension acts in the fiber direction, the flexible epoxy resin (A) releases the tension stress in the fiber direction on the surfaces of carbon fibers, and the rupture of carbon fibers is unlikely to propagate to the matrix resin. As a result, the tensile strength of the carbon fiber reinforced composite in the fiber direction can be improved. Further, since the flexible epoxy resin (A) does not diffuse in the matrix resin, it does not happen that the elastic modulus of the matrix resin decreases, and the compressive strength of the carbon fiber reinforced composite can be maintained.

As the polyfunctional glycidylamine epoxy resin, for example, tetraglycidyl diaminodiphenylmethane, triglycidyl aminophenol, triglycidyl aminocresol, etc. can be preferably used. A polyfunctional glycidylamine epoxy resin has an effect of improving heat resistance. It is preferred that the amount of the epoxy resin is 30 to 100 wt% per 100 wt% of all the epoxy resins. A more preferred range is 50 to 100 wt%. If the amount of the glycidylamine epoxy resin is less than 30 wt%, the carbon fiber reinforced composite may decrease in compressive strength or heat resistance.

As said tetraglycidyl diaminodiphenylmethane, for example, "Sumiepoxy" (registered trademark) ELM434 (produced by Sumitomo Chemical Co., Ltd.), YH434L (produced by Tohto Kasei Co., Ltd.), "Araldite" (registered trademark) MY720 (Huntsman Advanced Materials K.K.), "jER" (registered trademark) 604 (produced by Japan Epoxy Resins Co., Ltd.), etc. can be used. As triglycidyl aminophenol or triglycidyl aminocresol, for example, "Sumiepoxy" (registered trademark) ELM100 (produced by Sumitomo Chemical Co., Ltd.), "Araldite" (registered trademark) MY0510, "Araldite" (registered trademark) MYO600 (respectively produced by Huntsman Advanced Materials K.K.), "jER" (registered trademark) 630 (produced by Japan Epoxy Resins Co., Ltd.), etc. can be used.

The aromatic diamine curing agent is not especially limited if it is an aromatic amine used as an epoxy resin curing agent. Preferred examples of it include 3,3'-diaminodiphenylsulfone (3,3'-DDS), 4,4'-diaminodiphenylsulfone (4,4'-DDS), diaminodiphenylmethane (DDM), diaminodiphenyl ether (DADPE), bisaniline, benzyldimethylaniline, 2-(dimethylaminomethyl)phenol (DMP-10), 2,4,6-tris(dimethylaminomethyl)phenol (DMP-30), tri-2-ethylhexylate of DMP-30, and isomers and derivatives thereof. Any one of them can be used alone or two or more of them can also be used as a mixture.

It is preferred that the content of the aromatic diamine curing agent is 50 to 120 wt% based on the stoichiometric amount of all the epoxy resins. A more preferred range is 60 to 120 wt%, and a further more preferred range is 70 to 120 wt%. If the amount of the aromatic amine curing agent is less than 50 wt% of the stoichiometric amount of all the epoxy resins, the heat resistance of the obtained cured resin may not be sufficient. Further, if the amount of the aromatic amine curing agent is more than 120 wt%, the toughness of the obtained cured resin may decrease.

A thermoplastic resin can be mixed with the matrix resin of the carbon fiber reinforced composite of this invention, for improving the physical properties such as toughness of the obtained cured resin. As the thermoplastic resin, for example, a thermoplastic resin having bonds selected from the group consisting of carbon-carbon bonds, amide bonds, imide bonds (polyetherimide, etc.), ester bonds, ether bonds, siloxane bonds, carbonate bonds, urethane bonds, urea bonds, thioether bonds, sulfone bonds, imidazole bonds and carbonyl bonds in the main chain can be used. For example, a thermoplastic resin with both heat resistance and toughness such as a polysulfone, polyethersulfone, polyetherimide, polyimide, polyamide, polyamideimide, polyphenylene ether, phenoxy resin or vinyl-based polymer can be preferably used.

Especially a polyethersulfone or polyetherimide is suitable, since these effects can be exhibited without little impairing heat resistance. As the polyethersulfone, "Sumikaexcel" (registered trademark) 3600P, "Sumikaexcel" (registered trademark) 5003P, "Sumikaexcel" (registered trade mark) 5200P, "Sumikaexcel" (registered trademark) 7200P (respectively produced by Sumitomo Chemical Co., Ltd.) can be used. As the polyetherimide, "Ultem" (registered trademark) 1000, "Ultem" (registered trademark) 1010, "Ultem" (registered trademark) 1040 (respectively produced by Nihon GE Plastics K.K.), etc. can be used.

It is preferred that the thermoplastic resin is homogeneously dissolved in the epoxy resin composition or finely dispersed in it as particles, lest the prepreg production process mainly decided by impregnability should be inconvenienced.

Further, in the case where the thermoplastic resin is dissolved in the epoxy resin composition, it is preferred that the amount of the thermoplastic resin is 1 to 20 parts by weight per 100 parts by weight of the epoxy resin. A more preferred range is 1 to 15 parts by weight. On the other hand, in the case where it is dispersed in the epoxy resin composition, it is preferred that the amount of the thermoplastic resin is 10 to 40 parts by weight per 100 parts by weight of the epoxy resin. A more preferred range is 15 to 30 parts by weight. If the amount of the thermoplastic resin is less than the range, the effect of improving toughness may be insufficient. If the amount of the thermoplastic resin is more than the range, impregnability, tack-draping property and heat resistance may decrease.

Further, for modifying the matrix resin of this invention, a thermosetting resin other than epoxy resins, elastomer, filler and other additives can also be mixed.

The method for producing the prepreg of this invention is explained below. The prepreg of this invention is obtained by impregnating a carbon fiber bundle with a matrix resin. The prepreg can be produced, for example, by a wet process in which a carbon fiber bundle is impregnated with a solution with a low viscosity obtained by dissolving a matrix resin into a solvent such as methyl ethyl ketone or methanol, or a hot melt process in which a carbon fiber bundle is impregnated with a matrix resin lowered in viscosity by heating.

In a wet process, a reinforcing carbon fiber bundle is immersed in a liquid containing a matrix resin and pulled up, and an oven, etc. can be used to evaporate the solvent, for obtaining a prepreg.

Further, in a hot melt process, a method in which a reinforcing carbon fiber bundle is directly impregnated with a matrix resin lowered in viscosity by heating can be used. As another method, a releasing paper sheet, etc. is once coated with a matrix resin composition, to prepare a film at first, and the film is overlaid on each side or one side of the reinforcing carbon fiber bundle. Then, the film and the carbon fiber bundle are heated and pressurized to impregnate the matrix resin into the reinforcing carbon fiber bundle, for producing a prepreg. A hot melt process is a preferred means, since no solvent remains in the prepreg.

For molding a carbon fiber reinforced composite using the prepreg of this invention, for example, a method, in which sheets of the prepreg are laminated and subsequently pressurized and heated to cure the matrix resin, can be used.

Heating and pressuring methods include a pressure molding method, autoclave molding method, bag method, wrapping tape method, internal pressure molding method, etc. Especially for sporting goods, a wrapping tape method and an internal pressure molding method can be preferably used. For aircraft application in which higher quality and higher performance laminated composite are required, an autoclave molding method can be preferably used. For exterior materials of various vehicles, a pressure molding method can be preferably used.

Further, as a method for obtaining a carbon fiber reinforced composite in this invention, molding methods such as hand lay-up, RTM, "SCRIMP" (registered trademark), filament winding, pultrusion and resin film infusion can be selectively used for each purpose, in addition to the method of using a prepreg for obtaining the composite.

EXAMPLES

The carbon fiber bundle of this invention is explained below more particularly using examples. In the examples, the respective properties were measured by the following methods.

(Evaluation of compatibility between the components of a sizing agent)

Ten grams of a flexible epoxy resin [A] and 10 g of an epoxy resin [B] were mixed, and the mixture was poured in a transparent vessel with a gap thickness of 2 mm and given a heat history corresponding to the conditions of molding a matrix resin (heating at a rate of 1.5°C/min and keeping at a temperature of 180°C for 2 hours). In the case where the sizing agent was homogeneous and transparent, the epoxy resins were decided to be compatible with each other, and in other cases (where the sizing agent was separated into two layers or where the sizing agent was homogeneous but opaque) , the epoxy resins were decided to be incompatible with each other.

(Evaluation of compatibility between a flexible epoxy resin [A] and a matrix resin)

Four grams of a flexible epoxy resin [A] and 30 g of an epoxy resin composition as a matrix resin were mixed, and the mixture was poured in a transparent vessel with a gap thickness of 2 mm and given a heat history corresponding to the conditions of molding a matrix resin (heating at a rate of 1.5°C/min and keeping at a temperature of 180°C for 2 hours) . In the case where the cured resin was homogeneous and transparent, the resins were decided to be compatible with each other, and in other cases (where the cured resin was separated into two layers or where the cured resin was homogeneous but opaque) , the resins were decided to be incompatible with each other.

(Size content)

About 2 g of a carbon fiber bundle was weighed (W1) and allowed to stand in an electric furnace (volume 120 $cm^3$) set at a temperature of 450°C in a nitrogen flow rate of 50 liters/min for 15 minutes, to completely thermally decompose the sizing agent. The carbon fiber bundle was re-placed in a vessel in a dry nitrogen flow rate of 20 liters/min and cooled for 15 minutes. Then, the carbon fiber bundle was weighed (W2). The size content was obtained from the following formula.

$$\text{Size content (wt\%)} = [W1\ (g) - W2\ (g)]/[W1\ (g)] \times 100$$

(Physical properties of composite)

[Preparation of composite specimens]

At first, a matrix resin was coated on a release paper using a knife coater, to prepare a resin film with a unit area weight of 52 $g/m^2$. Then, the prepared resin film was wound around a steel drum with a circumference of about 2.7 m, and a carbon fiber bundle drawed from a creel was wound in straight alignment around the resin film via a traverse. Further, the resin film was laid over the carbon fiber bundle, and the matrix resin was impregnated into the carbon fiber bundle by press roll while the drum was rotated, for thereby preparing a 300 mm wide and 2.7 m long unidirectional prepreg.

In the above operation, the drum was heated to a temperature of 50 to 60°C, for better impregnation of the resin into the carbon fiber bundles. The rotating speed of the drum and the feed speed of the traverse were adjusted to prepare a prepreg with a unit area fiber weight of $195\pm5$ $g/m^2$ and a resin content of about 35 wt%.

The prepreg prepared like this was cut, and sheets of the prepreg were laminated, and cured by heating in an autoclave (heating at a rate of 1.5°C/min and a pressure of 0.59 MPa and molding at a temperature of 180°C for 2 hours), to obtain a cured panel. [Measurement of 0° tensile strength]

In the abovementioned preparation of composite specimens, sheets of a prepreg were laminated in one direction, to prepare a 1 mm thick cured panel. The 0° tensile strength was measured according to JIS-K-7073 (1988). From the cured panel, unidirectional 230±0. 4 mm long, 12. 5±0.2 mm wide and 1±0.2 mm thick 0° tensile test specimens were prepared. At a gauge length of 125±0.2 mm and at a crosshead speed of 1.3 mm/min in the tensile testing apparatus, measurement was performed. Five specimens were measured and the mean value was obtained. The measurement was performed at room temperature in a dry condition (25°C±2°, relative humidity 50%).

[Measurement of 90° tensile strength]

In the abovementioned preparation of composite specimens, sheets of a prepreg were laminated in one direction, to prepare a 2 mm thick cured panel. The 90° tensile strength was measured according to JIS-K-7073 (1988). From the cured panel, unidirectional 150±0.4 mm long, 20±0.2 mm wide and 2±0.2 mm thick 90° tensile test specimens were prepared. At a crosshead speed of 1 mm/min in the tensile testing apparatus, measurement was performed. Five specimens were measured and the mean value was obtained. The measurement was performed at room temperature in a dry condition (25°C±2°C, relative humidity 50%).

[Measurement of interlaminar shear strength]

In the abovementioned preparation of composite specimens, sheets of a prepreg were laminated in one direction, to prepare a 2 mm thick cured panel. The interlaminar shear strength was measured as a three-point bending test according to JIS-K-7078 (1991). From the cured panel, 14±0.4 mm long, 10±0.2 mm wide and 2±0.4 mm thick 0° direction specimens were prepared. The ratio of the span (1) to the specimen thickness (d) was set at 1/d = 5±0.2, and at a crosshead speed of 1 mm/min in the bending testing apparatus, measurement was performed. Five specimens were measured and the mean value was obtained. The measurement was performed at room temperature in a dry condition (25°C±2°C, relative humidity 50%) .

[Measurement of 0° compressive strength]

In the abovementioned preparation of composite specimens, sheets of a prepreg were laminated in one direction, to prepare a 1 mm thick cured panel. The 0° compressive strength was measured according to JIS-K-7076 (1991). From the cured panel, unidirectional 80±0.2 mm long, 12.5±0.2 mm wide and 1±0.2 mm thick unidirectional 0° compressive strength specimens were prepared. At a crosshead speed of 1.3 mm/min in the compressive testing apparatus, measurement was performed. Six specimens were measured and the mean value was obtained. The measurement was performed at room temperature in a dry condition (25°C±2°C, relative humidity 50%).

(Examples 1 to 10 and Comparative Examples 1 to 5)

Polyacrylonitrile containing 0.5 mol% of itaconic acid as a comonomer was spun, and the filaments were carbonized at a temperature of 1500°C and electrolytically surface treated using ammonium bicarbonate aqueous solution at 80 c/g, to obtain a unsized carbon fiber bundle consisting of 24,000 filaments. As properties, the carbon fiber bundle had a total fineness of 1000 tex, a specific gravity of 1.8, a strand tensile strength of 6.2 GPa and a strand tensile modulus of 297 GPa. The sizing agent consisted of the following components at any of the mixing ratios shown in Tables 1 and 2. Every sizing agent solution was an aqueous emulsion obtained by emulsifying any of the sizing agents with a nonionic surfactant. The carbon fiber bundle was dipped in the sizing agent solution, to be impregnated with a sizing agent solution, and dried at a temperature of 200°C for 2 minutes using a hot air dryer, to obtain a carbon fiber bundle coated with the sizing agent. Further, the matrix resin was prepared using a heated kneader from the matrix resin components mixed at any of the mixing ratios shown in Tables 1 through 3. Carbon fiber bundles impregnated with various sizing agents and various matrix resins were prepared as described above and were used in respective examples and comparative examples for evaluation tests, and the results are shown in Tables 1 to 3.

[Components of sizing agents]

As the flexible epoxy resin (A) , a dimer acid modified epoxy resin {"jER" (registered trademark) 872} (produced by Japan Epoxy Resins Co., Ltd.), castor oil modified epoxy resin {"ERISYS" (registered trademark) GE-35) (produced by PTI Japan K.K.), flexible alicyclic epoxy resin (GT-401) (produced by Daicel Chemical Industries, Ltd.) or polyethylene glycol diglycidyl ether {"Denacole" (registered trademark) EX-830} (produced by Nagase ChemteX Corporation) was used.

As the epoxy resin (B), polyglycerol polyglycidyl ether {"Denacole" (registered trademark) EX-512: having 4 epoxy groups and an epoxy equivalent of 168} (produced by Nagase ChemteX Corporation), sorbitol polyglycidyl ether {"Denacole" (registered trademark) EX-614B: having 4 epoxy groups and an epoxy equivalent of 173) (produced by Nagase ChemteX Corporation) , bisphenol A epoxy resin {"jER" (registered trademark) 828: having 2 epoxy groups and an epoxy equivalent of 189} (produced by Japan Epoxy Resins Co., Ltd.), or triglycidyl aminophenol {"Sumiepoxy" (registered trademark) ELM100) (produced by Sumitomo Chemical Co., Ltd.) was used.

[Components of matrix resin]

As components of matrix resins, tetraglycidyl diaminodiphenylmethane {"Sumiepoxy" (registered trademark) ELM434} (produced by Sumitomo Chemical Co., Ltd.), bisphenol A epoxy resin {"jER" (registered trademark) 828} (produced by Japan Epoxy Resins Co., Ltd.), 3,3'-diaminodiphenylsulfone (3,3'-DAS) (produced by Konishi Chemical Ind. Co., Ltd.), and polyethersulfone {"Sumikaexcel" (registered trademark) 5003P} (produced by Sumitomo Chemical Co., Ltd.) were used.

[Table 1]

| Item | | | Unit | Example 1 | Example 2 | Example 3 | Example 4 | Example 5 | Example 6 | Example 7 |
|---|---|---|---|---|---|---|---|---|---|---|
| Sizing agent | [A] | jER872 | [%] | 50 | | | | | | |
| | | ERISYS GE-35 | [%] | | 50 | | 50 | 30 | 70 | |
| | | GT-401 | [%] | | | 50 | | | | 50 |
| | | Denacole EX-830 | [%] | | | | | | | |
| | [B] | Denacole EX-512 | [%] | 50 | 50 | 50 | | | | 50 |
| | | Denacole EX614B | [%] | | | | 50 | 70 | 30 | |
| | | jER828 | [%] | | | | | | | |
| | Compatibility between [A] and [B] | | | Incompatible | Incompatible | Incompatible | Incompatible | Incompatible | Incompatible | Incompatible |
| Matrix resin | Sumiepoxy ELM434 | | [parts by weight] | 80 | 80 | 80 | 80 | 80 | 80 | 80 |
| | jER828 | | [parts by weight] | 20 | 20 | 20 | 20 | 20 | 20 | 20 |
| | 3,3'-DAS | | [parts by weight] | 40 | 40 | 40 | 40 | 40 | 40 | 40 |
| | Sumikaexcel 5003P | | [parts by weight] | 10 | 10 | 10 | 10 | 10 | 10 | 10 |
| | Compatibility between [A] and matrix resin | | - | Incompatible | Incompatible | Incompatible | Incompatible | Incompatible | Incompatible | Incompatible |
| Results of evaluation | size content | | [wt%] | 1.0 | 1.1 | 1.0 | 1.0 | 1.1 | 0.9 | 0.2 |
| | 0° tensile strength | | [MPa] | 2925 | 2906 | 2954 | 2940 | 2875 | 2970 | 2861 |
| | 90° tensile strength | | [MPa] | 95 | 92 | 91 | 91 | 92 | 82 | 86 |
| | Interlaminar shear strengt | | [MPa] | 121 | 120 | 119 | 120 | 122 | 108 | 105 |
| | 0° compressive strength | | [MPa] | 1730 | 1721 | 1748 | 1718 | 1757 | 1718 | 1704 |

[Table 2]

| Item | | | Unit | Example 1 | Example 9 | Comparative Example 1 | Comparative Example 2 | Comparative Example 3 | Comparative Example 4 |
|---|---|---|---|---|---|---|---|---|---|
| Sizing agent | [A] | jER872 | [%] | | 50 | 100 | | | 50 |
| | | ERISYS GE-35 | [%] | | | | | | |
| | | GT-401 | [%] | 50 | | | | | |
| | | Denacole EX-830 | [%] | | | | | 50 | |
| | [B] | Denacole EX-512 | [%] | 50 | 50 | | 100 | 50 | |
| | | Denacole EX614B | [%] | | | | | | |
| | | jER828 | [%] | | | | | | 50 |
| | Compatibility between [A] and [B] | | - | Incompatible | Incompatible | - | - | Compatible | Compatible |
| Matrix resin | Sumiepoxy ELM434 | | [parts by weight] | 80 | | | 80 | 80 | 80 |
| | jER828 | | [parts by weight] | 20 | 100 | 100 | 20 | 20 | 20 |
| | 3,3'-DAS | | [parts by weight] | 40 | 30 | 30 | 40 | 40 | 40 |
| | Sumikaexcel 5003P | | [parts by weight] | 10 | 10 | 10 | 10 | 10 | 10 |
| | Compatibility between [A] and matrix resin | | - | Incompatible | Compatible | Incompatible | - | Compatible | Incompatible |

(continued)

| Item | | Unit | Example 1 | Example 9 | Comparative Example 1 | Comparative Example 2 | Comparative Example 3 | Comparative Example 4 |
|---|---|---|---|---|---|---|---|---|
| Results of evaluation | size content | [wt%] | 3.3 | 1.0 | 0.9 | 0.9 | 1.0 | 1.0 |
| | 0° tensile strength | [MPa] | 2948 | 3008 | 3022 | 2705 | 2796 | 2830 |
| | 90° tensile strength | [MPa] | 80 | 90 | 62 | 95 | 74 | 75 |
| | Interlaminar shear strength | [MPa] | 102 | 118 | 73 | 120 | 98 | 93 |
| | 0° compressive strength | [MPa] | 1708 | 1602 | 1510 | 1750 | 1724 | 1701 |

[Table 3]

| Item | | | Unit | Example 10 | Comparative Example 5 |
|---|---|---|---|---|---|
| Sizing agent | [A] | jER872 | [%] | 50 | 50 |
| | | ERISYS GE-35 | [%] | | |
| | | GT-401 | [%] | | |
| | | Denacole EX-830 | [%] | | |
| | [B] | Sumiepoxy ELM100 | [%] | 50 | 50 |
| | Compatibility between [A] and [B] | | - | Incompatible | Incompatible |
| Matrix resin | Sumiepoxy ELM434 | | [parts by weight] | 80 | |
| | jER828 | | [parts by weight] | 20 | 100 |
| | 3,3'-DAS | | [parts by weight] | 40 | 30 |
| | Sumikaexcel 5003P | | [parts by weight] | 10 | 10 |
| | [Compatibility between [A] and matrix resin | | - | Incompatible | Compatible |
| Results of evaluation | size content | | [wt%] | 0.9 | 1.0 |
| | 0° tensile strength | | [MPa] | 2970 | 3022 |
| | 90° tensile strength | | [MPa] | 82 | 73 |
| | Interlaminar shear strength | | [MPa] | 106 | 96 |
| | 0° compressive strength | | [MPa] | 1706 | 1505 |

As shown in Tables 1 and 2, all the composite of Examples 1 to 9 were excellent in 0° tensile strength and were high in 0° compressive strength and/or 90° tensile strength and interlaminar shear strength. Further, the single fibers constituting each carbon fiber bundle were likely to be loosened without showing fuzz, and the respective carbon fiber bundles could be well impregnated with respective sizing agents and matrix resins. On the contrary, in Comparative Example 1, the cured panel had voids and was low in 0° compressive strength, 90° tensile strength and interlaminar shear strength. In Comparative Example 2, the carbon fiber bundle showed fuzz and was low in 0° tensile strength. In Comparative Examples 3 and 4, 0° tensile strength, 90° tensile strength and interlaminar shear strength were low.

As shown in Table 3, the prepreg of Example 10 was excellent in the 0° tensile strength of the composite and was high in 0° compressive strength, 90° tensile strength and interlaminar shear strength. In Comparative Example 5, 0° compressive strength, 90° tensile strength and interlaminar shear strength were lower than those of Example 10.

INDUSTRIAL APPLICABILITY

The carbon fiber bundle of this invention provides a carbon fiber reinforced composite excellent in the tensile strength and the compressive strength in the fiber direction and excellent in the tensile strength in the perpendicular direction to the fiber direction and the interlaminar shear strength. It is suitable for structural materials of aircraft, for sporting uses as golf shafts, fishing rods, etc., and for other general industrial uses.

## Claims

**1.** A carbon fiber bundle that is coated with a sizing agent containing a flexible epoxy resin (A) and an epoxy resin (B) incompatible with the flexible epoxy resin (A) as essential components, wherein the epoxy resin (B) is an aliphatic polyglycidyl ether compound having three of more epoxy groups and an epoxy equivalent of 200 of less.

**2.** A carbon fiber bundle, according to claim 1, wherein the flexible epoxy resin (A) contains two or more epoxy groups

and contains one of more of the groups represented by the following structural formulae (1) and (2):

[Chemical formula 3]

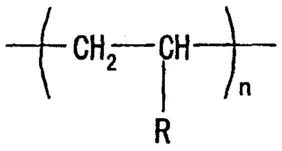

... Formula (1)

[Chemical formula 4]

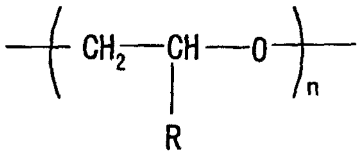

... Formula (2)

(in the formulae (1) and (2), n denotes an integer of 2 or more, and R denotes a hydrogen atom or alkyl group with 1 to 4 carbon atoms) between the epoxy group and the epoxy group.

3. A carbon fiber bundle, according to claim 1 or 2, wherein the ratio (A)/(B) by weight of the flexible epoxy resin (A) and the epoxy resin (B) in the sizing agent is 0.6 to 2.0.

4. A carbon fiber bundle, according to any one of claims 1 through 3, wherein the size content is 0.3 to 3.0 wt% based on the total weight of the carbon fibers.

5. A prepreg comprising the carbon fiber bundle as set forth in any one of claims 1 through 4 and a matrix resin containing a polyfunctional glycidylamine epoxy resin and an aromatic diamine curing agent.

6. A carbon fiber reinforced composite comprising the carbon fiber bundle as set forth in any one of claims 1 through 4 and a cured product of a resin composition containing a polyfunctional glycidylamine epoxy resin and an aromatic diamine curing agent.

7. A prepreg comprising a carbon fiber bundle and a matrix resin, wherein the carbon fiber bundle is coated with a sizing agent containing a flexible epoxy resin (A) and an epoxy resin (B) incompatible with the flexible epoxy resin (A) as essential components, and the matrix resin is incompatible with the flexible epoxy resin (A) and contains a polyfunctional glycidylamine epoxy resin and an aromatic diamine curing agent.

8. A prepreg, according to claim 8, wherein the flexible epoxy resin (A) contains two or more epoxy groups and contains one or more of the groups represented by the following structural formulae (1) and (2) :

[Chemical formula 5]

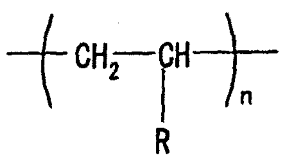

... Formula (1)

[Chemical formula 6]

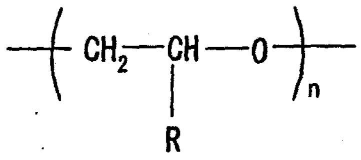

... Formula (2)

(in the formulae (1) and (2), n denotes an intefer of 2 or more, and R denotes a hudrogen atom of alkyl group with 1 to 4 carbon atoms) between the epoxy droup and the epoxy group.

**9.** A prepreg, according to claim 7 or 8, wherein the epoxy resin (B) is an aliphatic polyglycidyl ether compound having three of more epoxy groups and an epoxy equivalent of 200 of less.

**10.** A carbon fiber reinforced composite as a cured product of the prepreg as set forth in any of claims 7 through 9.

**INTERNATIONAL SEARCH REPORT**

International application No.
PCT/JP2006/322222

A. CLASSIFICATION OF SUBJECT MATTER
*D06M15/55*(2006.01)i, *C08J5/24*(2006.01)i, *D06M101/40*(2006.01)n

According to International Patent Classification (IPC) or to both national classification and IPC

B. FIELDS SEARCHED

Minimum documentation searched (classification system followed by classification symbols)
D06M13/00-15/715, C08J5/24, C08G59/00-59/72

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2002-18843 A (Toray Industries, Inc.), 22 January, 2002 (22.01.02), Claims 1, 2; comparative examples 1 to 3 (Family: none) | 1,3,5<br>2,4,6-10 |
| X<br><br>Y<br>A | JP 61-252371 A (Asahi Chemical Industry Co., Ltd.), 10 November, 1986 (10.11.86), Claim 1; page 3, lower left column, lines 6 to 18; example 1 (Family: none) | 1,3,4,6,7,9,10<br><br>5<br>2,8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 January, 2007 (10.01.07) | 30 January, 2007 (30.01.07) |
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.
PCT/JP2006/322222

C (Continuation). DOCUMENTS CONSIDERED TO BE RELEVANT

| Category* | Citation of document, with indication, where appropriate, of the relevant passages | Relevant to claim No. |
|---|---|---|
| A | JP 50-160398 A (Mitsubishi Chemical Industries Ltd.), 25 December, 1975 (25.12.75), Claim 1; examples (Family: none) | 1-10 |
| A | JP 2001-335651 A (Shin-Kobe Electric Machinery Co., Ltd.), 04 December, 2001 (04.12.01), Claim 1; examples (Family: none) | 1-10 |
| A | WO 00/53654 A1 (Toray Industries, Inc.), 14 September, 2000 (14.09.00), Claims 1, 2 (Family: none) | 1-10 |

Form PCT/ISA/210 (continuation of second sheet) (April 2005)

**INTERNATIONAL SEARCH REPORT**

International application No.
PCT/JP2006/322222

Although the inventions of claims 1 and 7 relate to a carbon fiber bundle treated with "a sizing agent containing a flexible epoxy resin (A) and an epoxy resin (B) which is not compatible with the flexible epoxy resin (A)" or a material containing such a carbon fiber bundle, only such epoxy resins mentioned in paragraphs [0022], [0023], [0030] and [0035] are disclosed in the description.

This international search report therefore covers those supported and disclosed by the description, namely the epoxy resins which are specifically mentioned in the description.

Form PCT/ISA/210 (extra sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004149721 A
- JP 7279040 A
- JP 2002363253 A
- JP 2004149980 A
- JP 2004169260 A